# EUROPÄISCHE PATENTANMELDUNG

(11) **EP 1 288 768 A2**
(43) Veröffentlichungstag der Anmeldung: **05.03.2003**
(21) Anmeldenummer: 02450147.0
(22) Anmeldetag: 02.07.2002
(51) Int. Cl.: G06F 1/00

(54) **Intelligenter Dongle**

(30) Priorität: 29.08.2001 AT 13662001
(71) Anmelder: Siemens AG Österreich, 1210 Wien (AT)
(72) Erfinder: Gottwald, Alfred, 2210 Gerasdorf (AT); Schwondra, Georg , Dipl.-Ing., 3033 Atlengbach (AT)
(74) Vertreter: Matschnig, Franz, Dipl.-Ing.

(57) **Zusammenfassung**

Ein Verfahren und eine Vorrichtung zur sicheren Zugangs/Benutzungskontrolle für zumindest ein auf einem Computer (COM) abgelegtes Programm (PRO), welches zumindest einen verschlüsselten Teil (VER) aufweist, wobei eine mit dem Computer (COM) verbindbare einem Lizenznehmer (LIN) zugeordnete Vorrichtung (VOR) vorgesehen ist, die dazu eingerichtet ist, den zumindest einen verschlüsselten Teil (VER) des Programms (PRO) zu entschlüsseln, wobei zumindest eine das Programm (PRO) betreffende Lizenznachricht (LIZ) und zumindest ein digitalen Schlüssel (SCH) zum Entschlüsseln des verschlüsselten Teils (VER) des Programms (PRO) von einem Lizenzgeber (LIG) an die Vorrichtung (VOR) übertragen werden, wo diese in einem Speicher abgelegt werden und auf Anforderung anhand der abgelegten Lizenznachricht (LIZ) überprüft wird, ob der verschlüsselte Teil (VER) des Programms (PRO) zu entschlüsseln ist und abhängig vom Ergebnis dieser Überprüfung der verschlüsselte Teil (VER) mithilfe des abgelegten, digitalen Schlüssels (SCH) entschlüsselt wird.

## Beschreibung

Die Erfindung betrifft ein Verfahren zur sicheren Zugangs/Benutzungskontrolle für zumindest ein auf einem Computer abgelegtes Programm, welches zumindest einen verschlüsselten Teil aufweist, wobei eine mit dem Computer verbindbare, einem Lizenznehmer zugeordnete Vorrichtung vorgesehen ist, die dazu eingerichtet ist, den zumindest einen verschlüsselten Teil des Programms zu entschlüsseln.

Weiters betrifft die Erfindung eine mit einem Computer verbindbare, einem Lizenznehmer zugeordnete Vorrichtung zur sicheren Zugangs/Benutzungskontrolle für zumindest ein auf dem Computer abgelegtes Programm, welches zumindest einen verschlüsselten Teil aufweist, wobei eine Steuerung vorgesehen ist, die dazu eingerichtet ist, den zumindest einen verschlüsselte Teil des Programms zu entschlüsseln.

Vorrichtungen und Verfahren der oben genannten Art sind unter der Bezeichnung "Dongle" bekannt geworden. Bei einem Dongle handelt es sich um eine hardwarebasierte Sicherheitsvorrichtung, die beispielsweise an einen seriellen oder parallelen Druckerport eines Desktop-Computers oder einen Kartensteckplatz eines Laptops anbindbar ist. Ein Schlüssel zum entschlüsseln verschlüsselter Programmteile und beispielsweise Passwörter sind bekannterweise hardcodiert in den herkömmlichen Dongles abgelegt. D. h. im Rahmen der Herstellung wird ein Schlüssel zur Entschlüsselung verschlüsselter Teile eines vorgebbaren Programms bzw. Lizenzinformationen fix in den Dongle implementiert. Eine nachträgliche Erweiterung um andere Schlüssel für andere Programme bzw. Änderungen von Nutzungsbedingungen oder -berechtigungen ist nicht in gesicherter Form möglich. Nachteilig an dieser Methode ist, dass für jedes Programm, welches mittels verschlüsselter Teile vor einer unbefugten Benutzung geschützt ist, ein eigener Dongle hergestellt werden muss, auch können die voreingestellten, hardcodierten Nutzungsbedingungen bei den bekannten Vorrichtungen nicht geändert werden.

Es ist daher eine Aufgabe der Erfindung, einen Weg zu schaffen, der die oben genannten Nachteile überwindet.

Diese Aufgabe wird mit einem Verfahren der eingangs genannten Art erfindungsgemäß dadurch gelöst, dass zumindest eine das Programm betreffende Lizenznachricht und zumindest ein digitaler Schlüssel zum Entschlüsseln des verschlüsselten Teils des Programms von einem Lizenzgeber an die Vorrichtung übertragen werden, wo der Schlüssel und die Lizenznachricht in einem Speicher abgelegt werden, und bei Starten des Programms anhand der abgelegten Lizenznachricht überprüft wird, ob der verschlüsselte Teil des Programms zu entschlüsseln ist, und abhängig von dem Ergebnis dieser Überprüfung der verschlüsselte Teil mithilfe des abgelegten, digitalen Schlüssels entschlüsselt wird.

Diese Lösung ermöglicht es im Gegensatz zu den bekannten hardcodierten Dongles nachträglich Änderungen der Nutzungsbedingungen durchzuführen bzw. die Vorrichtung um neue Schlüssel zu erweitern, sodass sie problemlos an beliebige Programme angepasst werden können. Die Erfindung erlaubt somit auch die Realisierung eines "Dongles" der für mehrere Programme, die mit unterschiedlichen Schlüsseln zu entschlüsseln sind, verwendet werden kann. Im Prinzip können mit der erfindungsgemäßen Lösung beliebig viele Schlüssel und Lizenzinformationen, d. h. Nutzungsbedingungen etc., in einem Dongle realisiert werden, wobei diese Daten an geänderte Nutzungsbedingungen angepasst werden können.

Um eine sichere Übertragung des Schlüssel und der Lizenzinformationen zu gewährleisten, können die zumindest eine Lizenznachricht und der digitale Schlüssel in verschlüsselter Form an die Vorrichtung übertragen und von einer Steuerung der Vorrichtung entschlüsselt und in entschlüsselter Form in dem Speicher abgelegt werden.

Zusätzlich kann die Lizenznachricht Zahlungsdaten betreffend die Zahlungsart bzw. die Zahlungsmodalitäten enthalten.

Eine vorteilhafte Variante der Erfindung sieht vor, dass die Lizenznachricht Zeitdaten, betreffend die Gültigkeitsdauer eines Benutzungszeitraumes für das Programm, enthält.

Weiters kann die Vorrichtung anhand einer Signatur des Programms dessen Authentizität überprüfen.

Eine bevorzugte Ausführungsform der Erfindung sieht vor, dass der Schlüssel und die Lizenznachricht zumindest abschnittsweise über ein Datennetz übertragen werden.

Eine andere Möglichkeit, den Schlüssel und die Lizenznachricht zu übertragen, besteht darin, dass der Schlüssel und die Lizenznachricht zumindest abschnittsweise über ein Funknetz übertragen werden.

Darüber hinaus können der Schlüssel und die Lizenznachricht auch über eine mit der Vorrichtung verbundene Eingabevorrichtung manuell eingegeben werden.

Weitere Vorteile lassen sich dadurch erzielen, dass die Lizenznachricht zumindest einen Freischaltcode für zumindest ein noch nicht freigeschaltetes Leistungsmerkmal bzw. einen noch nicht freigeschalteten verschlüsselten Teil des Programms enthält.

Weitere Vorteile lassen sich dadurch erzielen, dass die Vorrichtung als Chipkarte ausgeführt ist und der Schlüssel und die Lizenznachricht über ein mit einem Computer verbundenes Chipkartenmodul oder ein Chipkartenschreibgerät an die Vorrichtung übertragen werden.

Weitere Vorteile lassen sich dadurch erzielen, dass ein Datenaustausch zwischen der Vorrichtung und dem Programm über ein Chipkartenmodul oder ein Chipkartenlesegerät erfolgt.

Zur Durchführung des erfindungsgemäßen Verfahren eignet sich insbesondere eine Vorrichtung der eingangs genannten Art, welche eine Ein/Ausgabeeinheit aufweist, welche dazu eingerichtet ist, von einem einem Lizenzgeber zugeordneten Telekommunikationsendgerät eine das Programm betreffende Lizenznachricht und zumindest einen digitalen Schlüssel zum Entschlüsseln des verschlüsselten Teils des Programms, zu empfangen und an die Steuerung weiterzuleiten, die dazu eingerichtet ist den digitalen Schlüssel und die Lizenznachricht in einem Speicher abzulegen und bei Starten des Programms anhand der Lizenznachricht zu überprüfen, ob der verschlüsselten Teil des Programms zu entschlüsseln ist und abhängig vom Ergebnis dieser Überprüfung den verschlüsselten Teil mithilfe des digitalen Schlüssels zu entschlüsseln.

Vorteilhafterweise kann die Lizenznachricht Zahlungsdaten betreffend die Zahlungsart enthalten.

Weitere Vorteile lassen sich dadurch erzielen, dass die Lizenznachricht Zeitdaten betreffend die Gültigkeitsdauer eines Benutzungszeitraumes für das Programm enthält.

Darüber hinaus kann die Vorrichtung dazu eingerichtet sein, anhand einer Signatur des Programms dessen Authentizität zu überprüfen.

Eine bevorzugte Ausführungsform der Erfindung sieht vor, dass sie als Chipkarte ausgeführt ist und über ein Chipkartenmodul oder ein Lesegerät an den Computer anbindbar ist.

Eine andere, günstige Variante der Erfindung besteht darin, dass die Vorrichtung mit einer Eingabevorrichtung verbindbar ist, die dazu eingerichtet ist den Schlüssel und die Lizenznachricht über ein Datennetz zu empfangen.

In einer weiteren Variante der Erfindung kann die Vorrichtung mit einer Eingabevorrichtung verbindbar sein, die dazu eingerichtet ist, den Schlüssel und die Lizenznachricht über ein Funknetz zu empfangen.

Eine weitere sehr vorteilhafte Variante der Erfindung sieht vor, dass die Vorrichtung mit einer Eingabevorrichtung verbindbar ist, über welche der Schlüssel und Lizenznachricht manuell eingebbar sind.

Die Lizenznachricht kann zumindest einen Freischaltcode für zumindest ein noch nicht freigeschaltetes Leistungsmerkmal bzw. einen noch nicht freigeschalteten, verschlüsselten Teil des Programms enthalten.

Weiters kann die Vorrichtung dazu eingerichtet sein, die zumindest eine Lizenznachricht und den digitale Schlüssel in verschlüsselter Form zu empfangen und die Steuerung kann dazu eingerichtet sein, die Lizenznachricht und den Schlüssel zu entschlüsseln und in entschlüsselter Form in dem Speicher abzulegen.

In einer bevorzugten Ausführungsform der Erfindung ist die Vorrichtung als Chipkarte ausgeführt und der Schlüssel und die Lizenznachricht über ein mit einem Computer verbundenes Chipkartenmodul oder ein Chipkartenschreibgerät an die Vorrichtung übertragen werden.

Weiters kann die Eingabe/Ausgabeeinheit dazu eingerichtet sein, über ein Chipkartenmodul oder ein Chipkartenlesegerät mit dem Programm Daten auszutauschen.

Die Erfindung samt weiteren Vorteilen wird im folgenden anhand einiger nicht einschränkender Ausführungsbeispiele näher erläutert, die in der Zeichnung dargestellt sind, in dieser zeigen schematisch:
Fig. 1 eine erfindungsgemäße Vorrichtung;
Fig. 2 eine Übertragung einer Lizenznachricht und eines digitalen Schlüssels in eine erfindungsgemäße Vorrichtung;
Fig. 3 ein Ablaufdiagramm des erfindungsgemäßen Verfahrens;
Fig. 4 eine erfindungsgemäße Lizenznachricht;
Fig. 5 eine erfindungsgemäße Speichereinheit;
Fig. 6 eine Übertragungsart der Lizenznachricht und des digitalen Schlüssels aus Fig. 2 in die erfindungsgemäße Vorrichtung aus Fig. 1;
Fig. 7 eine weitere Übertragungsart der Lizenznachricht und des digitalen Schlüssels in die erfindungsgemäße Vorrichtung aus Fig. 1 und
Fig. 8 die Verwendung der erfindungsgemäßen Vorrichtung aus Fig. 1 in einem Netzwerk.

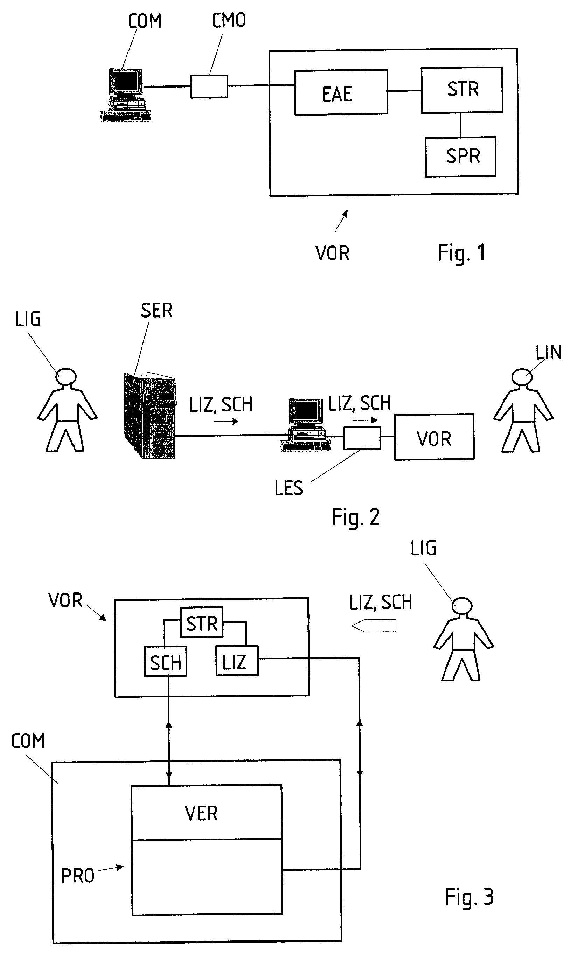

Gemäß Fig. 1 weist eine erfindungsgemäße Vorrichtung eine Eingabe/Ausgabeeinheit EAE auf mit der es Daten mit einem Computer COM bzw. mit einem auf diesem abgelegtem Programm, welches verschlüsselte Programmteile aufweist austauschen kann. Die Eingabe/Ausgabeeinheit EAE steht mit einer Steuerung STR in Verbindung, die auf den Inhalt eines Speichers STR zugreifen kann, um die Entschlüsselung verschlüsselter Teile des Programms durchzuführen. Erst die Entschlüsselung der verschlüsselten Teile macht diese für einen Benutzer anwendbar. In einer bevorzugten Ausführungsform der Erfindung ist die Vorrichtung VOR als Chipkarte ausgeführt. Verfügt der Computer COM über eine USB-Schnittstelle so kann die Anbindung der Chipkarte an den Computer über ein Chipkartenmodul CMO erfolgen. Weist der Computer COM nur eine parallele oder serielle Schnittstelle auf, so kann die Anbindung der Chipkarte an den Computer COM über ein Chipkartenlesegerät LES (FIG. 2) erfolgen.

Nach Fig. 2 kann die Übertragung eines von der Steuerung STR benötigten Schlüssels SCH und von Lizenzinformationen LIZ, welche Nutzungsbedingungen für das Programm bzw. für die verschlüsselten Programmteile vorgeben, beispielsweise von einem Server SER eines Lizenzgebers LIG an den mit der erfindungsgemäßen Vorrichtung VOR verbundnen Computer COM übertragen werden. Die an den Computer COM übertragenen Informationen können, beispielsweise über eine serielle, parallele oder USB-Schnittstelle in die Vorrichtung VOR übertragen werden. In einer bevorzugten Ausführungsform der Erfindung ist die Vorrichtung VOR als Chipkarte realisiert, die über ein Chipkartenmodul oder ein Chipkartenlesegerät an den Computer COM angebunden werden kann.

Gemäß Fig. 3 überprüft die Steuerung STR der Vorrichtung VOR, wenn ein Benutzer das Programm PRO starten möchte, anhand der von einem Lizenzgeber LIG an die Vorrichtung VOR übermittelten, in dem Speicher SPR abgelegten Lizenzinformationen LIZ, ob eine Entschlüsselung der verschlüsselten Teile VER des Programms PRO mittels des Schlüssels SCH erfolgen soll. Ergibt diese Überprüfung, dass für eine aktuelle Benutzung des Programms bzw. der verschlüsselten Programmteile eine Lizenz vorhanden ist, so wird die Entschlüsselung des verschlüsselten Programmteiles durchgeführt, wobei das Programm PRO so realisiert sein kann, dass es ohne Entschlüsselung des verschlüsselten Teiles nicht oder nur eingeschränkt benutzbar ist. Ergibt die Überprüfung der Lizenzinformationen, dass für die Benutzung des Programms PRO bzw. des verschlüsselten Teils VER keine Lizenz vorhanden ist, so wird der verschlüsselte Teil VER des Programms PRO nicht entschlüsselt, sodass eine Benutzung des Programms PRO nicht oder nur eingeschränkt möglich ist.

Darüber hinaus kann die Vorrichtung dazu eingerichtet sein, anhand einer Signatur des Programms dessen Authentizität zu überprüfen. Auf diese Weise kann sichergestellt werden, dass es sich bei dem benutzten Programm PRO um eine authentische und unmanipulierte Version des Programms PRO handelt. Auch kann dadurch erkannt werden, wenn eine andere Version des Programms PRO installiert wird.

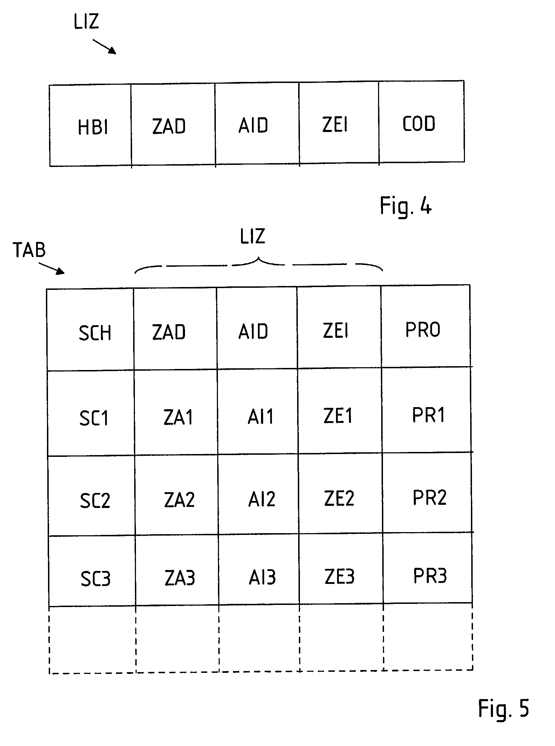

Nach Fig. 4 kann die Lizenznachricht LIZ eine Headernachricht enthalten, anhand welcher die Steuerung STR erkennen kann, dass es sich um eine Lizenznachricht LIZ handelt. Weiters kann die Lizenznachricht beispielsweise Zahlungsdaten ZAD, betreffend die Zahlungsart der Nutzungsberechtigung, "Application Identification" Daten API zur Identifizierung des Programms PRO, sowie Zeitdaten DAU, betreffend die Gültigkeitsdauer der Nutzungsberechtigung, enthalten.

Mögliche Zahlungsarten bzw. Modalitäten wären z. B. eine online Zahlung bei Programmstart, in diesem Fall kann, vorausgesetzt es besteht eine Kommunikationsverbindung zwischen der Vorrichtung VOR und einem Telekommunikationsendgerät SER, SEN des Lizenzgebers LIG, eine Abbuchung von einem vorher bekanntgegebenen Konto des Lizenznehmers erfolgen. Eine andere Zahlungsart besteht beispielsweise darin, dass die Benutzungsdauer erfasst und in der Vorrichtung oder dem Computer COM gespeichert wird und zu einem späteren Zeitpunkt mit dem Lizenzgeber abgerechnet wird. Prinzipiell sind natürlich beliebige Zahlungsarten möglich.

Bei Programmstart identifiziert sich das Programm PRO gegenüber der Vorrichtung VOR. Anhand der Daten API zur Identifizierung des Programms PRO kann die Steuerung STR das Programm PRO erkennen. Wird das Programm von der Steuerung STR erfolgreich identifiziert so überprüft die Steuerung STR, ob bzw. in welchem Umfang Nutzungsberechtigungen für das Programm PRO vorliegen.

Natürlich kann die Lizenznachricht LIZ noch andere Daten betreffend die Nutzungsbedingungen und Nutzungsrechte enthalten. So können beispielsweise Freischaltcodes COD für noch nicht aktivierte Features des Programms PRO ebenfalls in der Lizenznachricht enthalten sein.

Besteht eine Nutzungsberechtigung für eine vorgebbare Anzahl von Benutzungen des Programms so kann bei jedem Programmstart ein Nutzungszähler inkrementiert oder dekrementiert werden, wobei entweder bei erreichen der höchsten eingestellten Nutzungszahl oder des Wertes Null eine weitere Nutzung des Programms nicht mehr möglich ist, da in diesem Fall eine Entschlüsselung der verschlüsselten Programmteile seitens der Steuerung STR nicht mehr erfolgt.

Bei den in der Lizenznachricht enthaltenen Daten kann es sich aber auch um Zeitdaten handeln, die zur Benutzung des Programms in einem vorgebbaren Zeitraum berechtigt.

Gemäß Fig. 5 können in der Lizenznachricht LIZ enthaltenen Daten in Form beispielsweise in Form einer Tabelle TAB in dem Speicher SPR abgelegt sein. Dabei kann mehreren ein Programm PRO, PR1, PR2, PR3 betreffende Lizenzinformationen ein Schlüssel SCH, SC1, SC2 zugeordnet sein. Natürlich können auch einem Programm PRO, PR1, PR2, PR3 mehrere Schlüssel SCH zugeordnet sein, die unterschiedlich verschlüsselte Programmteile eines Programms entschlüsseln können. Erwirbt ein Benutzer beispielsweise, die Lizenz zur Benutzung einer Grundversion des Programms PRO, so kann das Programm PRO trotz allem in der Vollversion auf dem Computer COM des Lizenznehmers LIN installiert werden, wobei die erweiterten Leistungsmerkmale und Programmteile verschlüsselt bleiben. Sind verschiedene Programmteile diese Programms unterschiedlich verschlüsselt, so muss zum Freischalten eines dieser Programmteile der dazupassende Schlüssel erworben werden, sodass für ein Programm auch mehrere Schlüssel vorgesehen sein können.

Anhand der Lizenzinformationen kann, wie bereits oben erwähnt, von der Steuerung STR entschieden werden, welche der verschlüsselten Programmteile entschlüsselt werden dürfen. Erweitert der Lizenznehmer LIN durch Kauf einer weiteren Nutzungsberechtigung seine Nutzungsbefugnis, so können, falls die verschlüsselten Teile nach der gleichen Methode verschlüsselt sind, auch mit dem selben Schlüssel SCH weitere Programmteile entschlüsselt werden.

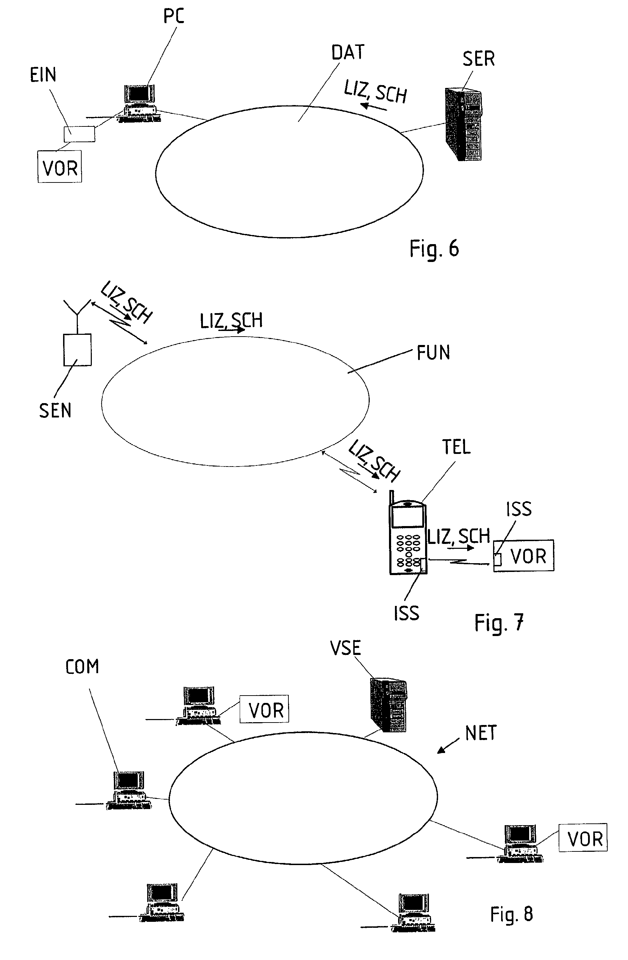

Nach Fig. 6 können der Schlüssel SCH und die Lizenznachricht LIZ, welche die von einem Lizenznehmer gewünschte Art des Nutzungsumfanges und der Nutzungsbedingungen enthält, über ein Datennetz DAT, beispielsweise das Internet, an die Vorrichtung VOR übertragen werden. Ist die Vorrichtung VOR als Chipkarte ausgeführt, so kann sie, wie bereits oben erwähnt, mittels eines Chipkartenmoduls bzw. -lesegeräts an einen Computer COM angeschlossen sein. Ist dieser Computer COM dem Datennetz DAT, z. B. dem Internet verbunden, so kann die Übertragung der Lizenznachricht LIZ an den Computer COM, beispielsweise gemäß dem TCP/IP - Protokoll, erfolgen. Die von dem Computer COM erhaltenen Daten können dann über das Chipkartenmodul oder -schreib/Lesegerät in die Chipkarte übertragen werden.

Gemäß Fig. 6 besteht eine andere Möglichkeit der Übertragung des Schlüssels SCH bzw. der Lizenznachricht LIZ in die Chipkarte darin, dass von einer von dem Lizenzgeber autorisierten Person über eine Eingabevorrichtung, beispielsweise die Tastatur des COM, der Schlüssel SCH und die Lizenznachricht LIZ manuell eingegeben werden, wobei die Übertragung in die Vorrichtung VOR mittels des Chipkartenmoduls oder Chipkartenschreib-/Lesegeräts erfolgen kann.

Die Lizenznachricht LIZ und der Schlüssel SCH können beispielsweise von dem Lizenzgeber LIG an ein Mobilfunktelefon TEL des Lizenznehmers LIG, übermittelt werden. Weist dieses Mobilfunktelefon TEL eine Infrarotschnittstelle ISS auf, so können die empfangenen Daten über eine Infrarotschnittstelle der Vorrichtung VOR an diese Übertragen werden. Alternativ dazu kann die Überragung der Daten von dem Mobilfunktelefon TEL an einen Computer COM des Lizenznehmers über die Infrarotschnittselle ISS überragen werden, von wo aus die Datenübertragung über eine serielle, parallele oder USB-Schnittstelle in die Vorrichtung VOR erfolgen kann.

Nach Fig. 8 können die in der Vorrichtung abgelegten Nutzungsrechte und Schlüssel in einem Netzwerk NET, beispielsweise von einem Verwaltungsserver VSE, zentral verwaltet werden. Hat eine Firma beispielsweise ein Lizenzpaket zur Benutzung eines Programms für hundert Mitarbeiter erworben, so können diese Lizenzen von dem Verwaltungsserver über das Netzwerk NET an die Vorrichtungen VOR übertragen und im Bedarfsfall wieder entzogen, d.h. aus dem Speicher der Vorrichtung VOR gelöscht werden. Die Realisierungsmöglichkeit der erfindungsgemäßen Vorrichtung als Chipkarte ermöglicht einem Benutzer darüber hinaus, sich an jedem beliebigen Computer COM des Netzwerkes zu begeben und dort die für ihn freigeschalteten Programme zu benutzen.

## Patentansprüche

1. Verfahren zur sicheren Zugangs/Benutzungskontrolle für zumindest ein auf einem Computer (COM) abgelegtes Programm (PRO), welches zumindest einen verschlüsselten Teil (VER) aufweist, wobei eine mit dem Computer (COM) verbindbare, einem Lizenznehmer (LIN) zugeordnete Vorrichtung (VOR) vorgesehen ist, die dazu eingerichtet ist, den zumindest einen verschlüsselten Teil (VER) des Programms (PRO) zu entschlüsseln, **dadurch gekennzeichnet, dass** zumindest eine das Programm (PRO) betreffende Lizenznachricht (LIZ) und zumindest ein digitaler Schlüssel (SCH) zum Entschlüsseln des verschlüsselten Teils (VER) des Programms (PRO) von einem Lizenzgeber (LIG) an die Vorrichtung (VOR) übertragen werden, wo der Schlüssel (SCH) und die Lizenznachricht (LIZ) in einem Speicher (SPR) abgelegt werden, und bei Starten des Programms (PRO) anhand der abgelegten Lizenznachricht (LIZ) überprüft wird, ob der verschlüsselte Teil (VER) des Programms (PRO) zu entschlüsseln ist, und abhängig von dem Ergebnis dieser Überprüfung der verschlüsselte Teil (VER) mithilfe des abgelegten, digitalen Schlüssels (SCH) entschlüsselt wird.

2. Verfahren nach Anspruch 1, **dadurch gekennzeichnet, dass** die zumindest eine Lizenznachricht (LIZ) und der digitale Schlüssel (SCH, SC1, SC2, SC3) in verschlüsselter Form an die Vorrichtung (VOR) übertragen und von einer Steuerung (STR) der Vorrichtung (VOR) entschlüsselt und in entschlüsselter Form in dem Speicher (SPR) abgelegt werden.

3. Verfahren nach Anspruch 1 oder 2, **dadurch gekennzeichnet, dass** die Lizenznachricht (LIZ) Zahlungsdaten (ZAD, ZA1, ZA2, ZA3) betreffend die Zahlungsart enthält.

4. Verfahren nach einem der Ansprüche 1 bis 3, **dadurch gekennzeichnet, dass** die Lizenznachricht (LIZ) Zeitdaten (ZEI, ZE1, ZE2, ZE3) betreffend die Gültigkeitsdauer eines Benutzungszeitraumes für das Programm (PRO, PR1, PR2, PR3) enthält.

5. Verfahren nach einem der Ansprüche 1 bis 4, **dadurch gekennzeichnet, dass** die Vorrichtung anhand einer Signatur des Programms (PRO) dessen Authentizität überprüft.

6. Verfahren nach einem der Ansprüche 1 bis 5, **dadurch gekennzeichnet, dass** der Schlüssel (SCH) und die Lizenznachricht (LIZ) zumindest abschnittsweise über ein Datennetz (DAT) übertragen werden.

7. Verfahren nach einem der Ansprüche 1 bis 6, **dadurch gekennzeichnet, dass** der Schlüssel (SCH) und die Lizenznachricht (LIZ) zumindest abschnittsweise über ein Funknetz (FUN) übertragen werden.

8. Verfahren nach einem der Ansprüche 1 bis 7, **dadurch gekennzeichnet, dass** der Schlüssel (SCH) und die Lizenznachricht (LIZ) über eine mit der Vorrichtung (VOR) verbundene Eingabevorrichtung manuell eingegeben werden.

9. Verfahren nach einem der Ansprüche 1 bis 8, **dadurch gekennzeichnet, dass** die Lizenznachricht (LIZ) zumindest einen Freischaltcode (COD) für zumindest ein noch nicht freigeschaltetes Leistungsmerkmal bzw. einen noch nicht freigeschalteten verschlüsselten Teil (VER) des Programms (PRO) enthält.

10. Verfahren nach einem der Ansprüche 1 bis 9, **dadurch gekennzeichnet, dass** die Vorrichtung (VOR) als Chipkarte ausgeführt ist und der Schlüssel (SCH) und die Lizenznachricht (LIZ) über ein mit dem Computer (COM) verbundenes Chipkartenmodul oder ein Chipkartenschreibgerät an die Vorrichtung übertragen werden.

11. Verfahren nach Anspruch 10, **dadurch gekennzeichnet, dass** ein Datenaustausch zwischen der Vorrichtung (VOR) und dem Programm (PRO) über ein Chipkartenmodul oder ein Chipkartenlesegerät erfolgt.

12. Mit einem Computer (COM) verbindbare, einem Lizenznehmer (LIZ) zugeordnete Vorrichtung (VOR) zur sicheren Zugangs/Benutzungskontrolle für zumindest ein auf dem Computer (COM) abgelegtes Programm (PRO), welches zumindest einen verschlüsselten Teil (VER) aufweist, wobei eine Steuerung (STR) vorgesehen ist, die dazu eingerichtet ist, den zumindest einen verschlüsselte Teil (VER) des Programms (PRO) zu entschlüsseln, **dadurch gekennzeichnet, dass** sie eine Ein/Ausgabeeinheit (EAE) aufweist, welche dazu eingerichtet ist, von einem einem Lizenzgeber (LIG) zugeordnetem Telekommunikationsendgerät (SER, SEN) eine das Programm (PRO) betreffende Lizenznachricht (LIZ) und zumindest einen digitalen Schlüssel (SCH) zum Entschlüsseln des verschlüsselten Teils (VER) des Programms (PRO) zu empfangen und an die Steuerung (STR) weiterzuleiten, die dazu eingerichtet ist, den digitalen Schlüssel (SCH) und die Lizenznachricht (LIZ) in einem Speicher (SPR) abzulegen und bei Starten des Programms (PRO) anhand der Lizenznachricht (LIZ) zu überprüfen, ob der verschlüsselten Teil (VER) des Programms (PRO) zu entschlüsseln ist, und abhängig vom Ergebnis dieser Überprüfung den verschlüsselten Teil (VER) mithilfe des digitalen Schlüssels (SCH) zu entschlüsseln.

13. Vorrichtung nach Anspruch 12, **dadurch gekennzeichnet, dass** die Lizenznachricht (LIZ) Zahlungsdaten (ZAL) betreffend die Zahlungsart enthält.

14. Vorrichtung nach Anspruch 12 oder 13, **dadurch gekennzeichnet, dass** die Lizenznachricht (LIZ) Zeitdaten (ZEI) betreffend die Gültigkeitsdauer eines Benutzungszeitraumes für das Programm (PRO) enthält.

15. Vorrichtung nach einem der Ansprüche 12 bis 14, **dadurch gekennzeichnet, dass** sie dazu eingerichtet ist, anhand einer Signatur des Programms (PRO) dessen Authentizität zu überprüfen.

16. Vorrichtung nach einem der Ansprüche 12 bis 15, **dadurch gekennzeichnet, dass** sie als Chipkarte ausgeführt ist und über ein Chipkartenmodul oder ein Lesegerät an den Computer (COM) anbindbar ist.

17. Vorrichtung nach einem der Ansprüche 12 bis 16, **dadurch gekennzeichnet, dass** sie mit einer Eingabevorrichtung verbindbar ist, die dazu eingerichtet ist, den Schlüssel (SCH) und die Lizenznachricht (LIZ) über ein Datennetz (DAT) zu empfangen.

18. Vorrichtung nach einem der Ansprüche 12 bis 17, **dadurch gekennzeichnet, dass** sie mit einer Eingabevorrichtung verbindbar ist, die dazu eingerichtet ist den Schlüssel (SCH) und die Lizenznachricht (LIZ) über ein Funknetz (FUN) zu empfangen.

19. Vorrichtung nach einem der Ansprüche 12 bis 18, **dadurch gekennzeichnet, dass** sie mit einer Eingabevorrichtung verbindbar ist, über welche der Schlüssel (SCH) und die Lizenznachricht (LIZ) manuell eingebbar sind.

20. Vorrichtung nach einem der Ansprüche 12 bis 19, **dadurch gekennzeichnet, dass** die Lizenznachricht (LIZ) zumindest einen Freischaltcode (COD) für zumindest ein noch nicht freigeschaltetes Leistungsmerkmal bzw. einen noch nicht freigeschalteten, verschlüsselten Teil (VER) des Programms enthält.

21. Vorrichtung nach einem der Ansprüche 12 bis 20, **dadurch gekennzeichnet, dass** sie dazu eingerichtet ist, die zumindest eine Lizenznachricht (LIZ) und den digitalen Schlüssel (SCH) in verschlüsselter Form zu empfangen, und die Steuerung (STR) dazu eingerichtet ist, die Lizenznachricht (LIZ) und den Schlüssel (SCH) zu entschlüsseln und in entschlüsselter Form in dem Speicher (SPR) abzulegen.

22. Vorrichtung nach einem der Ansprüche 12 bis 21, **dadurch gekennzeichnet, dass** die Vorrichtung (VOR) als Chipkarte ausgeführt ist und der Schlüssel (SCH) und die Lizenznachricht (LIZ) über ein mit dem Computer (COM) verbundenes Chipkartenmodul oder ein Chipkartenschreibgerät an die Vorrichtung (VOR) übertragen werden.

23. Vorrichtung nach einem der Ansprüche 12 bis 22 **dadurch gekennzeichnet, dass** die Eingabe/Ausgabeeinheit (EAE) dazu eingerichtet ist, über ein Chipkartenmodul oder ein Chipkartenlesegerät mit dem Programm (PRO) Daten auszutauschen.
